# EUROPEAN PATENT APPLICATION

(11) **EP 4 498 126 A1**
(43) Date of publication of application: **29.01.2025**
(21) Application number: 23880893.5
(22) Date of filing: 31.10.2023
(51) Int. Cl.: G01S 17/08, G01S 7/481

(54) **LASER RANGING DEVICE**

(30) Priority: 12.06.2023 CN 202321498508 U; 25.09.2023 CN 202322618338 U
(71) Applicant: Shenzhen Mileseey Technology Co., Ltd., Shenzhen, Guangdong 518051 (CN)
(72) Inventor: QU, Zhangkun, Shenzhen, Guangdong 518051 (CN); YANG, Jianjie, Shenzhen, Guangdong 518051 (CN); CHOU, Zhi, Shenzhen, Guangdong 518051 (CN)
(74) Representative: Corradini, Corrado
(86) International application number: PCT/CN2023/128350
(87) International publication number: WO 2024/255076

(57) **Abstract**

The present disclosure relates to a laser ranging device, which comprises a housing portion, a first laser emitting portion, a laser receiving portion, a second laser emitting portion, and a control portion. The housing portion is provided with a first light outlet and a second light outlet. The first laser emitting portion is configured to emit a first laser along the first direction to an object to be measured. The laser receiving portion is configured to receive a laser reflected by the object to be measured along the first direction. The second laser emitting portion is configured to emit a second laser along a second direction, the second laser sequentially passes through the second optical lens and the second light outlet to form a sector-shaped laser light curtain, and the sector-shaped laser light curtain is projected onto the object to be marked and forms a zero baseline on the object to be marked. The control portion is located in the housing portion and is electrically connected to the first laser emitting portion, the laser receiving portion and the second laser emitting portion. According to the present disclosure, when the laser ranging device is difficult to approach a construction object to be marked, a distance between a zero position of the laser ranging device and the construction object to be marked, which is difficult to be compensated, can be compensated, so that it can be adapted to more usage scenarios.

## Description

### TECHNICAL FIELD

The present disclosure relates to the technical field of laser ranging, and in particular to a laser ranging device.

### BACKGROUND

Laser ranging device is an instrument that uses a laser beam to measure distance. When distance measurement is required, a measurement key is pressed once, and then the laser ranging device will emit a laser beam visible to naked eyes. A precise pointing of the laser ranging device is controlled by hand or a mechanical device until a laser spot is moved to the desired position to be measured. The measurement key is pressed once more, the laser ranging device receives part of laser reflected by the object to be measured, analyzes the distance between the object to be measured and the laser ranging device according to the reflected laser, and display the distance number on a display screen for people to read.

However, there are still many inconveniences in the marking when using laser ranging devices. Currently, the most commonly used marking method is to put the laser ranging device as close as possible to the construction object to be marked, and then make a mark close to the zero position of the laser ranging device. However, in places where the terrain and objects are complex and changeable, this method is sometimes inconvenient. For example, when the laser ranging device is close to the object to be marked, it cannot illuminate the object to be measured, and when it illuminates the object to be measured, it is difficult to get close to the object to be marked, which puts the marking method into a dilemma.

### SUMMARY

Accordingly, it is necessary to provide a laser ranging device to address the problem that it is inconvenient to mark for the laser ranging device.

The present disclosure provides a laser ranging device, including:
a housing portion provided with a first light outlet and a second light outlet;
a first laser emitting portion configured to emit a first laser along a first direction to an object to be measured, the first laser emitting portion being located in the housing portion, and an emitting end of the first laser emitting portion being opposite to the first light outlet;
a first optical lens mounted in the first light outlet of the housing portion;
a laser receiving portion configured to receive a reflected laser reflected by the object to be measured along the first direction, the laser receiving portion being located in the housing portion, and a receiving end of the first receiving portion being opposite to the first optical lens;
a second optical lens mounted in the second light outlet of the housing portion;
a second laser emitting portion configured to emit a second laser along a second direction, the second laser sequentially passing through the second optical lens and the second light outlet to form a sector-shaped laser light curtain, the sector-shaped laser light curtain being projected onto an object to be marked, and forming a zero baseline on the object to be marked, the second laser emitting portion being located in the housing portion, and an emitting end of the second laser emitting portion being opposite to the second optical lens, wherein the second direction is configured to be perpendicular to the first direction; and
a control portion located in the housing portion and electrically connected to the first laser emitting portion, the laser receiving portion, and the second laser emitting portion.

In one embodiment, two second laser emitting portions are arranged on both sides of the first laser emitting portion along the second direction.

In one embodiment, two sector-shaped laser light curtains formed by the two second laser emitting portions are parallel to each other.

In one embodiment, two sector-shaped laser light curtains formed by the two second laser emitting portions are coplanar with each other.

In one embodiment, an angular radian of the sector-shaped laser light curtain is defined as a, where 0°<α<180°.

In one embodiment, an unfolded thickness of the sector-shaped laser light curtain is defined as d, where d<5mm.

In one embodiment, the first optical lens is an aspherical laser lens; and/or the second optical lens is a cylindrical lens.

In one embodiment, the control portion includes a first circuit board, a second circuit board, and a power supply member. The first laser emitting portion, the laser receiving portion and the second laser emitting portion are located on a first side of the first circuit board, and the first laser emitting portion, the laser receiving portion and the second laser emitting portion are electrically connected to the first circuit board, respectively. The second circuit board is electrically connected to the first circuit board. The power supply member is electrically connected to the first circuit board and/or the second circuit board.

In one embodiment, the laser ranging device further includes a screen display panel electrically connected to a second side of the first circuit board, the second side of the first circuit board is away from the first side of the first circuit board.

In one embodiment, the laser ranging device further includes a charging interface electrically connected to the second circuit board.

In one embodiment, the housing portion includes an inner frame member, an outer frame of the inner frame member being connected to the first circuit board and the second circuit board, respectively, and the first laser emitting portion, the laser receiving portion, the second laser emitting portion, and the power supply member being placed in the inner frame member; and a housing assembly covering the inner frame member.

In one embodiment, the housing assembly includes a first housing, and the inner frame member is inserted and mounted in the first housing along the second direction.

In one embodiment, the housing assembly further includes a second housing, and the first housing is inserted and mounted in the second housing along the first direction.

In one embodiment, the laser ranging device further includes a magnetic member mounted on a wall surface of at least one of the inner frame member, the first housing, and the second housing.

In one embodiment, the laser ranging device further includes a third circuit board mounted on a side wall of the inner frame member, the third circuit board is electrically connected to the second circuit board.

In one embodiment, the laser ranging device further includes a lighting member electrically connected to the second circuit board; and a lighting switch electrically connected to the third circuit board.

The laser ranging device provided by the present disclosure can determine a zero position of the laser ranging device without touching or approaching the being marked construction object. When it is difficult to approach the being marked construction object, a distance between the zero position of the laser ranging device and the being marked construction object, which is difficult to be compensated, can be compensated. The zero position of the laser ranging device can be determined without approaching the construction object to be marked, so that it can cover more usage scenarios.

### BRIEF DESCRIPTION OF THE DRAWINGS

FIG. 1 is a schematic view of a laser ranging device provided by an embodiment of the present disclosure viewed from an aspect.
FIG. 2 is a schematic view of a laser ranging device provided by an embodiment of the present disclosure viewed from another aspect.
FIG. 3 is an exploded view of a laser ranging device provided by an embodiment of the present disclosure viewed from an aspect.
FIG. 4 is an exploded view of a laser ranging device provided by an embodiment of the present disclosure viewed from another aspect.

Reference signs:
100-first laser emitting portion;
101-laser receiving portion;
102-second laser emitting portion;
103-first circuit board;
104-screen display panel;
105-second circuit board;
106-power supply member;
107-lighting member;
108-lighting switch;
109-charging interface;
110-housing portion;
1101-inner frame member;
1102-first housing;
1103-second housing;
111 -magnetic member;
114-third circuit board;
115-button.

### DETAILED DESCRIPTION OF THE EMBODIMENTS

In order to make the above objects, features and advantages of the present disclosure clear and easier to understand, the specific embodiments of the present disclosure are described in detail below in combination with the accompanying drawings. Many specific details are set forth in the following description to facilitate a full understanding of the present disclosure. However, the present disclosure can be implemented in many ways different from those described herein, and those skilled in the art can make similar improvements without departing from the connotation of the present disclosure. Therefore, the present disclosure is not limited by the specific embodiments disclosed below.

In the description of the present disclosure, it should be understood that the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential direction" are based on the azimuth or position relationship shown in the attached drawings, which are only for the convenience of describing the present disclosure and simplifying the description, rather than indicating or implying that the device or element must have a specific azimuth, be constructed and operated in a specific azimuth, so such terms cannot be understood as a limitation of the present disclosure.

In addition, the terms "first" and "second" are only used for descriptive purposes and cannot be understood as indicating or implying relative importance or implicitly indicating the number of indicated technical features. Thus, the features defined with "first" and "second" may explicitly or implicitly include at least one of the features. In the description of the present disclosure, the term "a plurality of", when used, means at least two, such as two, three, etc., unless otherwise expressly and specifically defined.

In the present invention, unless otherwise expressly specified and limited, the terms "mount", "connect", "contact", "fix" and other terms should be understood in a broad sense, for example, they can be fixed connections, detachable connections, or integrated. They can be mechanical connection or electrical connection. They can be directly connected or indirectly connected through an intermediate medium. They can be the connection within two elements or the interaction relationship between two elements, unless otherwise expressly limited. For those skilled in the art, the specific meaning of the above terms in the present disclosure can be understood according to the specific situation.

In the present invention, unless otherwise expressly specified and limited, the first feature "above" or "below" the second feature may be in direct contact with the first and second features, or the first and second features may be in indirect contact through an intermediate medium. Moreover, the first feature is "above" the second feature, but the first feature is directly above or diagonally above the second feature, or it only means that the horizontal height of the first feature is higher than the second feature. The first feature is "below" of the second feature, which can mean that the first feature is directly below or obliquely below the second feature, or simply that the horizontal height of the first feature is less than that of the second feature.

It should be noted that when an element is called "fixed to" or "provided on" another element, it can be directly on another element or there can be a centered element. When an element is considered to be "connected" to another element, it can be directly connected to another element or there may be intermediate elements at the same time. The terms "vertical", "horizontal", "up", "down", "left", "right" and similar expressions used herein are for the purpose of illustration only and do not represent the only embodiment.

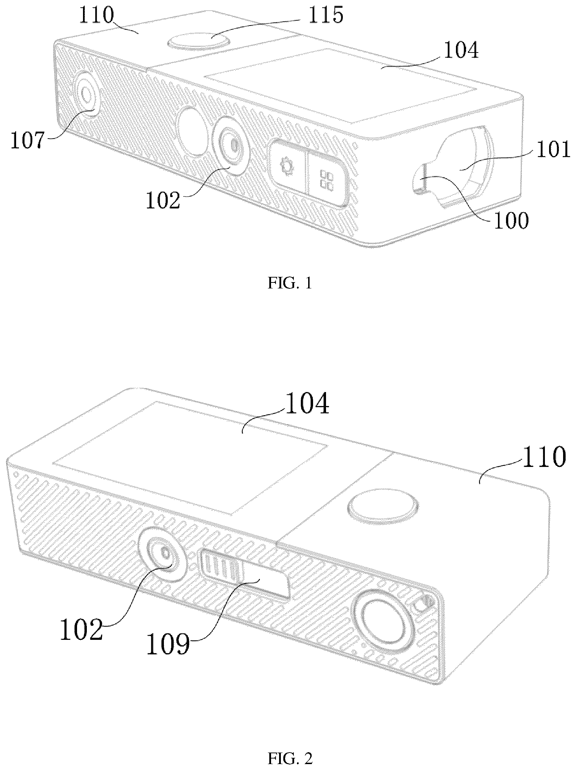

Referring to FIG. 1, FIG. 1 is a schematic view of a laser ranging device provided by an embodiment of the present disclosure viewed from an aspect. A housing portion 110 is provided with a first light outlet and a second light outlet. A first laser emitting portion 100 and the laser receiving portion 101 are both located in the housing portion 110 and are arranged at a front end of the housing portion 110. When using the laser ranging device according to the embodiment, a button 115 is pressed for a first time, and an emitting end of the first laser emitting portion 100 emits a laser beam visible to naked eyes along a first direction, and the orientation direction of the laser ranging device can be controlled by hand or a mechanical device. The laser light emitted by the first laser emitting portion 100 is projected onto a target position of an object to be measured through the first light outlet. Part of the laser light reflected back from the target position of the object to be measured along the first direction returns to the laser receiving portion 101 through the first light outlet. When the button 115 is pressed for a second time, the laser receiving portion 101 receives the part of the reflected light, and analyzes a distance between the laser ranging device and the target position of the object to be measured based on the received part of the reflected light. A screen display panel 104 displays the measurement results of the first laser emitting portion 100 and the laser receiving portion 101 of the laser ranging device, which is convenient for the user to read.

Users often not only want to obtain the measurement results of the first laser emitting portion 100 and the laser receiving portion 101, but also need to make marks at a specified distance, so as to guide the subsequent work. At this time, the button 115 is pressed for a third time, and a zero position is determined in such a manner that a tail portion of the laser ranging device approaches a construction object to be marked. However, in a measurement environment with complex terrain and objects, the manner of determining the zero position by approaching the tail portion of the laser ranging device to the construction object to be marked requires higher flatness of the construction object to be marked. If there are potholes in the construction object to be marked, the determination of the zero position will be affected.

FIG. 2 is a schematic view of a laser ranging device provided by an embodiment of the present disclosure viewed from another aspect. As shown in FIG. 1 and FIG. 2, the tail portion of the laser ranging device can be seen in FIG. 2. By pressing the button 115 for a fourth time or directly triggering the second laser emitting portion 102 through the screen display panel 104, the second laser emitting portion 102 emits a second laser along the second direction to pass through a second optical lens and the second light outlet sequentially to form a sector-shaped laser light curtain. The sector-shaped laser light curtain will be projected onto the object to be marked and forms a zero baseline on the object to be marked. In the embodiment, the laser ranging device does not need to approach the construction object to be marked as close as possible. When the laser ranging device is difficult to approach the construction object to be marked, a distance between the zero position of the laser ranging device and the construction object to be marked, which is difficult to be compensated originally, is compensated. The marking can be conveniently performed without being limited by the terrain restrictions, and it is more convenient to use.

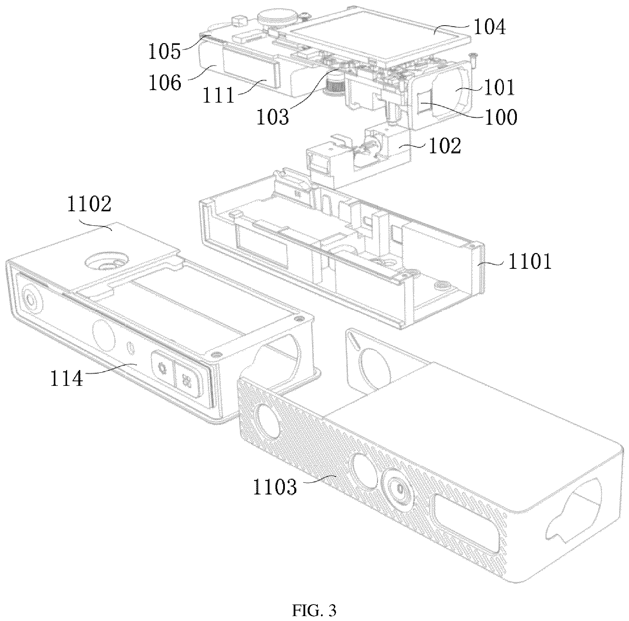

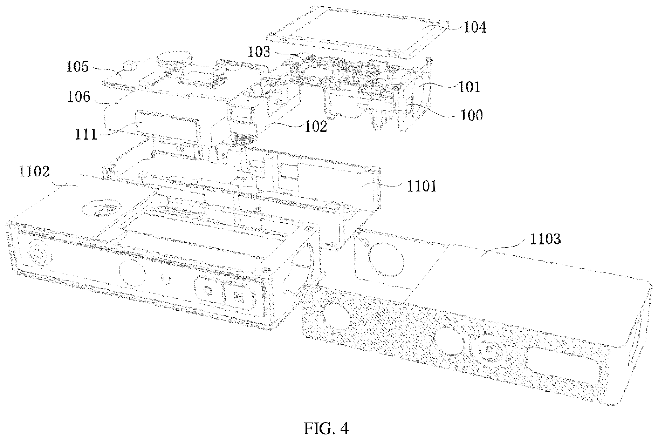

Referring to FIGS. 3 to 4, FIG. 3 is an exploded view of a laser ranging device provided by an embodiment of the present disclosure viewed from an aspect, and FIG. 4 is an exploded view of a laser ranging device provided by an embodiment of the present disclosure viewed from another aspect. The structure of the laser ranging device provided by the embodiment will be described in detail as follows. The laser ranging device provided by the embodiment includes the housing portion 110, the first laser emitting portion 100, the laser receiving portion 101, the second laser emitting portions 102, and a control portion. Each component will be described in detail below.

The housing portion 110 is provided with the first light outlet and the second light outlet. The first light outlet is mainly configured for the light output and light input of a ranging laser. The illustrated first light outlet that is opposite to the first laser emitting portion 100 is in communication with the first light outlet that is opposite to the laser receiving portion 101, and serves as a light outlet provided at the front end of the housing portion 110. Optionally, the first light outlet opposite to the first laser emitting portion 100 and the first light outlet opposite to the laser receiving portion 101 may also be used as two independent light outlets provided at the front end of the housing portion 110. The second light outlet is mainly configured for the light output and light input of a marking laser. The second light outlet is provided opposite to an emitting end of the second laser emitting portion 102. The second light outlet may be provided only on one side of the housing portion 110, or may be provided on both sides of the housing portion 110, which may be adjusted according to the arrangement of the second laser emitting portion 102, and is not specifically limited.

The first laser emitting portion 100 is configured to emit a first laser to the object to be measured along the first direction (a front-rear direction as shown in FIG. 1). The first laser emitting portion 100 is located in the housing portion 110, and the emitting end of the first laser emission part 100 is provided opposite to the first light outlet. The specific structure of the first laser emitting portion 100 as an integrated module will not be elaborated herein. However, an output end of the first laser emitting portion 100 is generally provided with an optical lens for laser emission. The optical lens used for laser emission can be an aspherical laser lens.

The laser receiving portion 101 is configured to receive part of the laser reflected by the object to be measured along the first direction. The laser receiving portion 101 is located in the housing portion 110, and a receiving end of the laser receiving portion 101 is provided opposite to the first optical lens mounted in the first light outlet. The first optical lens herein may be an aspherical laser lens. Optionally, the laser receiving portion 101 and the first optical lens can be integrated into a module through a mounting bracket.

The second laser emitting portion 102 is configured to emit the second laser along the second direction (a left-right direction as shown in FIG. 1) to pass through the second optical lens and the second light outlet sequentially to form a sector-shaped laser light curtain, and the sector-shaped laser light curtain is projected onto the object to be marked, and forms a zero baseline on the object to be marked. The second laser emitting portion 102 is located in the housing portion 110, and the emitting end of the second laser emitting portion 102 is provided opposite to the second optical lens. The second direction is perpendicular to the first direction. The second optical lens herein may be a cylindrical lens. Optionally, the second laser emitting portion 102 and the second optical lens can be integrated into a module through a mounting bracket.

The control portion is located in the housing portion 110, and the control portion is electrically connected to the first laser emitting portion 100, the laser receiving portion 101, and the second laser emitting portion 102.

In an embodiment of the present disclosure, the second laser emitting portions 102 are located on a rear side of the first laser emitting portion 100 (or laser receiving portion 101), and one of the second laser emitting portions 102 can be arranged on a left or right side of the first laser emitting portion 100 (or the laser receiving portion 101). The second laser emitting portion 102 can project a sector-shaped laser light curtain. After the sector-shaped laser light curtain is projected onto the object to be marked, a visible zero baseline will be generated on the object to be marked. When the laser ranging device is difficult to approach the construction object to be marked, a distance between the zero position of the laser ranging device and the construction object to be marked, which is difficult to be compensated originally, is compensated, the marking can be conveniently performed without being limited by the terrain restrictions, and it is more convenient to use.

In an embodiment of the present disclosure, two second laser emitting portions 102 are located on the rear side of the first laser emitting portion 100 (or the laser receiving portion 101), and the two second laser emitting portions 102 may be simultaneously arranged on the left and right sides of the first laser emitting portion 100 (or the laser receiving portion 101). The two second laser emitting portions 102 may respectively form two sector-shaped laser light curtains to the left and right along the second direction. In this embodiment, the objects to be marked on both sides of the laser ranging device can be marked at the same time, and the object to be marked on the left side or the right side can also be marked as required. This embodiment is not only applicable to more complex ranging environments, but also can improve the marking efficiency.

Optionally, the two sector-shaped laser light curtains formed by the two second laser emitting portions 102 are parallel. Correspondingly, the two second light outlets are provided on the left and right sides of the housing portion 110 in a staggered manner.

Optionally, the two sector-shaped laser light curtains formed by the two second laser emitting portions 102 are coplanar with each other. Correspondingly, the two second light outlets are opened on the left and right sides of the housing portion 110 in alignment with each other.

A brief description of the sector-shaped laser light curtain is as follows. The angular arc of the sector-shaped laser light curtain may be defined as α, where 0°<α< 180°. An unfolded thickness of the sector-shaped laser light curtain may be defined as d, where d<5mm.

In an optional embodiment, the control portion includes a first circuit board 103, a second circuit board 105, and a power supply member 106. The first circuit board 103, the second circuit board 105 and the power supply member 106 will be described in detail below respectively.

The first circuit board 103 is configured to perform ranging calculations, screen display control, etc. In an optional embodiment, the first circuit board 103 includes a photoelectric conversion module and a control module. The photoelectric conversion module may be configured to capture the optical signal of part of the laser reflected back from the target position of the object to be measured or to capture the optical signal of all the laser reflected back, and convert the captured optical signal of the reflected beam into at least one feedback electrical signal. The control module is configured to obtain the feedback electrical signal and determine the distance between the laser receiving portion 101 and the target position of the object to be measured. The control module is electrically connected to the screen display panel 104. The screen display panel 104 can display the distance between the laser receiving portion 101 and the target position of the object to be measured, i.e., a ranging result of the laser ranging device can be displayed on the screen display panel 104. The screen display panel 104 is located above the first circuit board 103, and the first circuit board 103 is electrically connected to the first circuit board 103. The first laser emitting portion 100, the laser receiving portion 101, and the second laser emitting portion 102 are located below the first circuit board 103, and the first laser emitting portion 100, the laser receiving portion 101, and the second laser emitting portion 102 are electrically connected to the first circuit board 103, respectively.

The second circuit board 105 is electrically connected to the first circuit board 103. The second circuit board serves as a secondary board and is mainly configured to integrate other functional components besides distance measurement, such as the button 115, a power supply member 106, a lighting member 107, etc.

The power supply member 106 is mounted at a lower portion of the second circuit board 105. The power supply member 106 may be electrically connected to the first circuit board 103. The power supply member 106 may also be electrically connected to the second circuit board 105. The power supply member 106 may also be electrically connected to the first circuit board 103 and the second circuit board 105 at the same time.

It should be noted that the first circuit board 103, the second circuit board 105, and the power supply member 106 can be directly or indirectly connected to each other according to device arrangement requirements, which is not limited to the above connection mode, and other circuit board arrangement modes that may be known by those skilled in the art may be applicable, which will not be listed herein.

In an optional embodiment, the button 115 is electrically connected to the second circuit board 105. To facilitate assembly, the button 115 is electrically connected to an upper side of the second circuit board 105. During use, the laser ranging device can be switched to different measuring modes by pressing the button, which is conducive to the overall simplification of the structure.

In an optional embodiment, the laser ranging device further includes a third circuit board 114. The third circuit board 114 is mainly configured as a button board with a relatively single function. The third circuit board 114 is mounted on a side wall of an inner frame member 1101, and the third circuit board 114 is electrically connected to the second circuit board 105.

In an optional embodiment, the lighting member 107 is located at a rear end of the laser ranging device. When the zero position is determined by approaching the tail portion of the laser ranging device to the construction object to be marked, the lighting member 107 is convenient for the user to accurately learn the actual environment of the construction object to be marked, and it is also convenient for the user to record and process the ranging result at any time. The lighting member 107 is electrically connected to the second circuit board 105. A lighting switch 108 is electrically connected to the third circuit board 114. The lighting member 107 and the lighting switch 108 are distributed on the left and right sides of the laser ranging device. The lighting member 107 is turned on and off by pressing the lighting switch 108 to illuminate the environment around the laser ranging device, especially to illuminate the environment around the rear portion of the laser ranging device, which is conducive to ensuring measurement accuracy and the accuracy of the results.

In an optional embodiment, the laser ranging device further includes a charging interface 109. The charging interface 109 is electrically connected to a charging circuit on the second circuit board 105 and configured to provide a rechargeable function for the laser ranging device.

In an optional embodiment, the laser ranging device further includes a peripheral interface. The peripheral interface is electrically connected the charging circuit on the second circuit board 105.

In an optional embodiment, the housing portion 110 includes the inner frame member 1101 and a housing assembly.

An outer frame of the inner frame member 1101 is connected to the first circuit board 103 and the second circuit board 105 respectively, and the first laser emitting portion 100, the laser receiving portion 101, the second laser emitting portion 102 and the power supply member 106 are located in the inner frame member 1101. The inner frame member 1101 is mainly configured to support an integrated device composed of the first circuit board 103, the second circuit board 105, the first laser emitting portion 100, the laser receiving portion 101, the second laser emitting portion 102, and the power supply member 106. Specifically, the power supply member 106 enters an inner cavity of the inner frame member 1101 through a top opening of the inner frame member 1101. Generally, a space can be reserved in the inner cavity of the inner frame member 1101 for placing the power supply member. The power supply member may be fixed to the inner frame member 1101 through adhesive tape.

The housing assembly covers the inner frame member 1101, and the third circuit board is mounted on the housing assembly. A plurality of molding holes are provided on the housing assembly, and positions of the molding holes correspond to the positions of the button on the third circuit board, the emitting end of the second laser emitting portion 102 and the charging interface 109.

In an embodiment, the housing assembly includes a first housing 1102. The inner frame member 1101 is pushed into the first housing 1102 along the second direction from a side wall of the first housing 1102. The third circuit board 103 is mounted on the side wall of the first housing 1102. The button 115 extends out of the first housing 1102. The screen display panel 104 is mounted on an upper wall of the first housing 1102.

In an embodiment, the housing assembly includes a first housing 1102 and a second housing 1103. The inner frame member 1101 is pushed into the first housing 1102 along the second direction from a side wall of the first housing 1102, and the first housing 1102 is pushed into the second housing 1102 along the first direction from a rear side of the second housing 1103. The third circuit board 103 is mounted on the side wall of the first housing 1102. The button 115 extends out of the first housing 1102. The screen display panel 104 is mounted on an upper wall of the first housing 1102. Referring to the figures, it can be seen that the second housing 1103 is provided with a plurality of molding holes, and positions of the molding holes correspond to the button on the third circuit board, the emitting end of the second laser emitting portion 102 and the charging interface 109.

With respect to the assembly manner between the inner frame member 1101, the first housing 1102, and the second housing 1103, it is not limited to the above mounting manner. For example, the assembly manner between the inner frame member 1101 and the first housing 1102, the first housing 1102 and the second housing 1103 are assembled using a side push-in manner. For another example, the inner frame member 1101 and the first housing 1102, and the first housing 1102 and the second housing 1103 are assembled using a front-to-back push-in manner, and will not be listed one by one herein.

In an embodiment, the laser ranging device further includes a magnetic member 111. The magnetic member 111 is mounted on a wall surface of at least one of the inner frame member 1101, the first housing 1102, and the second housing 1103.

In an optional embodiment, the magnetic member 111 is mounted on a side wall of the inner cavity of the inner frame member 1101, and the laser ranging device is attracted to a fixing position (such as an iron frame, etc.) through magnetic attraction, so that it is no longer necessary to rely on a hand-held laser ranging device or a mechanical control device to support the laser ranging device.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

The foregoing descriptions are merely specific embodiments of the present disclosure, but are not intended to limit the protection scope of the present disclosure. Any variation or replacement readily figured out by a person skilled in the art within the technical scope disclosed in the present disclosure shall all fall within the protection scope of the present disclosure.

## Claims

1. A laser ranging device, comprising:
a housing portion (110) provided with a first light outlet and a second light outlet;
a first laser emitting portion (100) configured to emit a first laser along a first direction to an object to be measured, the first laser emitting portion (100) being located in the housing portion (110), and an emitting end of the first laser emitting portion (100) being opposite to the first light outlet;
a first optical lens mounted in the first light outlet of the housing portion (110);
a laser receiving portion (101) configured to receive a reflected laser reflected by the object to be measured along the first direction, the laser receiving portion (101) being located in the housing portion (110), and a receiving end of the first receiving portion (101) being opposite to the first optical lens;
a second optical lens mounted in the second light outlet of the housing portion (110);
a second laser emitting portion (102) configured to emit a second laser along a second direction, the second laser sequentially passing through the second optical lens and the second light outlet to form a sector-shaped laser light curtain, the sector-shaped laser light curtain being projected onto an object to be marked, and forming a zero baseline on the object to be marked, the second laser emitting portion (102) being located in the housing portion (110), and an emitting end of the second laser emitting portion (102) being opposite to the second optical lens, wherein the second direction is configured to be perpendicular to the first direction; and
a control portion located in the housing portion (110) and electrically connected to the first laser emitting portion (100), the laser receiving portion (101), and the second laser emitting portion (102).

2. The laser ranging device according to claim 1, wherein two second laser emitting portions (102) are arranged on both sides of the first laser emitting portion (100) along the second direction.

3. The laser ranging device according to claim 2, wherein two sector-shaped laser light curtains formed by the two second laser emitting portions (102) are parallel to each other.

4. The laser ranging device according to claim 2, wherein two sector-shaped laser light curtains formed by the two second laser emitting portions (102) are coplanar with each other.

5. The laser ranging device according to claim 1, wherein an angular radian of the sector-shaped laser light curtain is defined as a, where 0°<α<180°.

6. The laser distance measuring device according to claim 1, wherein an unfolded thickness of the sector-shaped laser light curtain is defined as d, where d<5mm.

7. The laser distance measuring device according to claim 1, wherein the first optical lens is an aspherical laser lens; and/or the second optical lens is a cylindrical lens.

8. The laser ranging device according to claim 1, wherein the control portion comprises:
a first circuit board (103), wherein the first laser emitting portion (100), the laser receiving portion (101) and the second laser emitting portion (102) are located on a first side of the first circuit board (103), and the first laser emitting portion (100), the laser receiving portion (101) and the second laser emitting portion (102) are electrically connected to the first circuit board (103), respectively;
a second circuit board (105) electrically connected to the first circuit board (103); and a power supply member (106) electrically connected to the first circuit board (103) and/or the second circuit board (105).

9. The laser ranging device according to claim 8, further comprising a screen display panel (104) electrically connected to a second side of the first circuit board (103), wherein the second side of the first circuit board (103) is away from the first side of the first circuit board (103).

10. The laser ranging device according to claim 8, further comprising a charging interface (109) electrically connected to the second circuit board (105).

11. The laser ranging device according to claim 8, wherein the housing portion (110) comprises:
an inner frame member (1101), an outer frame of the inner frame member (1101) being connected to the first circuit board (103) and the second circuit board (105), respectively, and the first laser emitting portion (100), the laser receiving portion (101), the second laser emitting portion (102), and the power supply member (106) being placed in the inner frame member (1101); and
a housing assembly covering the inner frame member (1101).

12. The laser distance measuring device according to claim 11, wherein the housing assembly comprises a first housing (1102), and the inner frame member (1101) is inserted and mounted in the first housing (1102) along the second direction.

13. The laser distance measuring device according to claim 12, wherein the housing assembly further comprises a second housing (1103), and the first housing (1102) is inserted and mounted in the second housing (1103) along the first direction.

14. The laser ranging device according to claim 13, further comprising a magnetic member (111) mounted on a wall surface of at least one of the inner frame member (1101), the first housing (1102), and the second housing (1103).

15. The laser ranging device according to claim 11, further comprising a third circuit board (114) mounted on a side wall of the inner frame member (1101), wherein the third circuit board (114) is electrically connected to the second circuit board (105).

16. The laser ranging device according to claim 15, further comprising:
a lighting member (107) electrically connected to the second circuit board (105); and
a lighting switch (108) electrically connected to the third circuit board (114).
